(19) Europäisches Patentamt
European Patent Office
Office européen des brevets

(11) Publication number : **0 385 326 B1**

# (12) EUROPEAN PATENT SPECIFICATION

(45) Date of publication of patent specification : **11.08.93 Bulletin 93/32**

(51) Int. Cl.$^5$ : **H01B 7/00**

(21) Application number : **90103651.7**

(22) Date of filing : **26.02.90**

## (54) Rubber composite for wire core of high tension resistive wire.

(30) Priority : **27.02.89 JP 43139/89**

(43) Date of publication of application : **05.09.90 Bulletin 90/36**

(45) Publication of the grant of the patent : **11.08.93 Bulletin 93/32**

(84) Designated Contracting States : **DE FR GB**

(56) References cited :
**EP-A- 0 184 954**
**EP-A- 0 237 500**
**EP-A- 0 329 188**
**DE-A- 1 932 673**
**US-A- 4 435 692**

(73) Proprietor : **YAZAKI CORPORATION**
**4-28, Mita 1-chome**
**Minato-ku Tokyo 108 (JP)**

(72) Inventor : **Inada, Toshio, c/0 Yazaki Parts Co., Ltd**
**252 Kawashimada**
**Gotenba-shi, Shizuoka-ken (JP)**
Inventor : **Kikuchi, Norio, c/0 Yazaki Parts Co., Ltd**
**252 Kawashimada**
**Gotenba-shi, Shizuoka-ken (JP)**

(74) Representative : **Hansen, Bernd, Dr.rer.nat. et al**
**Hoffmann, Eitle & Partner, Patentanwälte,**
**Postfach 81 04 20**
**W-8000 München 81 (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

### BACKGROUND OF THE INVENTION

#### Field of the Invention

The present invention relates to an improvement in rubber composite suitable for use as a wire core of a high tension resistive wire, in particular of a high tension resistive wire for noise prevention in automotive vehicles, and more specifically to a rubber composite for the wire core excellent in noise prevention, extrusion productivity, low temperature characteristics, heat resistance, tensile strength, etc.

#### Description of Prior Art

Fig. 1 shows an example of prior-art high tension resistive wire suitable for use as an ignition cord for automotive vehicles as described in US-A-4 435 692. In Fig. 1, the cord is composed of conductor 5, an insulating rubber coating layer 6, a glass fiber braid 7, and a sheath 8. Further, the conductor 5 is made up of a reinforcing cord 5a of a bundle of fine, high-strength fibers such as glass fiber, an extruded coating layer 5b formed of a material such as a rubber composite, and a fine metallic resistive wire 5c made of an Ni-Cr alloy wound around the wire core 5A composed of the reinforcing cord 5a and the rubber composite 5b.

The present invention relates to a rubber composite 5b used for the extruded wire core 5A of the high tension resistive electric wire shown in Fig. 1.

Conventionally, the wire core 5A is formed by extruding rubber composite 5b on aromatic polyamide fiber 5a such as Kevlar fiber (Trademark of Dupont). Further a ferrite powder mixed fluorine rubber has been used for the rubber composite 5b in order to improve noise prevention effect of the high tension resistive wire see for example EP-A-0 329 188, published on the 23.08.89.

In the prior-art fluorine based rubber composite, however, since the Mooney viscosity of fluorine rubber is high, when a large amount of ferrite, filler and plasticizer are mixed with the fluorine rubber for improving noise prevention effect, the strength of rubber decreases and therefore extrusion processing becomes difficult. In other words, since the amount of the filling or additive agents are strictly limited, there exists a problem in that the noise prevention characteristics of the conventional fluorine based rubber is not satisfactory.

In addition, since the low temperature characteristics of the fluorine based rubber are poor, there exists another problem in that the wire core is easily broken into trouble.

### SUMMARY OF THE INVENTION

With these problems in mind, therefore, it is the primary object of the present invention is to provide a rubber composite for a wire core of a high tension resistive wire, which is excellent in noise prevention characteristics, extrusion productivity, low-temperature characteristics, heat resistance and tensile strength.

To achieve the above-mentioned object, a rubber composite for an electric wire core of a high tension resistive wire, according to the present invention, comprises: (a) 100 weight-part base rubber formed of a mixture of fluorine based rubber and silicone rubber; (b) 50 to 700 weight-part ferrite for noise prevention; and (c) 5 to 10 weight-part carbon black as a reinforcement agent. Further, the rubber composite according to the present invention preferably comprises 10 or less weight-part silane coupling agent such as epoxysilane, aminosilane, etc. for increasing bonding strength between the base rubber and the ferrite, 10 or less weight-part plasticizer such as silicone oil, and 10 or less weight-part filler such as talc, clay, silica, barium, sulfate, titanium oxide, calcium carbon, etc.

The weight ratio of the fluorine based rubber to the silicone rubber in the mixture lies within a range from 4 : 6 to 9 : 1. The fluorine based rubber is an ethylene proplylene tetrafluoride based fluorine rubber, such as elastic polymer of ethylene proplylene tetrafuoride based fluorine rubber, such as elastic polymer of ethylene proplylene tetrafluoride and/or vinylide tetrafluoride and other copolymerizable monomer. The silicon rubber is an organopolysiloxane basted elastic material.

Further, the particle diameters of the ferrite are less than 200 micron. The weight ratio of the ferrite to the base rubber lies preferably within a range from 2 to 4.

In the rubber composite for a wire core of a high tension resistive wire according to the present invention, since silicone rubber is mixed with fluorine based rubber as the base rubber, it is possible to markedly increase the mixture ratio of ferrite to the base rubber, so that it is possible to improve the noise prevention effect of the high tension resistive wire, without deteriorating extrusion productivity, low-temperature characteristics, heat-resistance, tensile strength, etc.

## BRIEF DESCRIPTION OF THE DRAWINGS

Fig. 1 is a perspective view showing an example of a prior-art high tension resistive wire suitable for use as an ignition cord for automotive vehicles, for assistance in explaining the rubber composite for the wire core related to the present invention; and

Fig. 2 is a table for listing the weight ratios and the characteristics of test examples of the various rubber composites according to the present invention.

## DETAILED DESCRIPTION OF THE PREFERRED EMBODIMENTS

The component and the effect of the rubber composite for wire cores according to the present invention will be described hereinbelow.

In the present invention, the fluorine based rubber is generically elastic copolymer of ethylene propylene tetrafluoride and/or vinylidene tetrafluoride and other copolymerizable monomer. Especially, ethylene propylene tetrafluoride based fluorine rubber having the following constitutional (structural) formula is preferable from the standpoint of excellent peroxide bridge formation with respect to silicone rubber.

$$( - CF_2 - CF_2 - CH_2 - \underset{}{\overset{CH_3}{\overset{|}{CH}}} - )\ n$$

Further, the fluorine based rubber having a wide viscosity range from high to low is adoptable.

The silicon rubber used for the present invention is an organopolysiloxane based elastic material. The viscosity of the fluorine based rubber can be reduced by mixing the silicon rubber with the fluorine based rubber at a predetermined proportion, so that various addition agents as described below can be mixed or dispersed uniformly.

The mixture proportion of the fluorine rubber and the silicone rubber in the base rubber is 4:6 to 9:1 in weight ratio, and preferably from 5:5 to 8:2. When the silicone rubber is smaller in weight ratio than the above value, the dispersion effect of additive agent is low, and when higher than the above value, the tensile strength or elongation percentage decreases.

It is preferable to mix ferrite with particle diameter less than 200 micron (now on the market) with the base rubber formed by mixing the fluorine based rubber and silicon rubber, as a noise prevention agent.

The ferrite of 50 to 700 parts by weight is mixed with the base rubber of 100 parts by weight, and the preferable range of the ferrite is 200 to 400 parts by weight. Here, weight part or parts by weight implies a weight ratio of A to B when the weight of B is represented as 100.

In general, the upper limit of the amount (parts by weight) of ferrite with respect to only the fluorine based rubber of 100 parts by weight is conventionally about 200 parts by weight. In the present invention, however, since the base rubber obtained by mixing the fluorine based rubber with the silicon rubber is used, it is possible to mix ferrite with the fluorine based rubber at such a high ratio of 400 parts by weight, so that it is possible to markedly improve the noise prevention characteristics as compared with the conventional rubber.

Further, in the present invention, carbon black is used as a reinforcing agent. However, when the amount of the reinforcing agent is excessive, since the hardness of the composite becomes excessively high, it is necessary to restrict the amount of the reinforcing agent 10 or less parts by weight with respect to the base rubber of 100 parts by weight. Therefore, it is preferable to use a soft carbon black with a low hardness.

The silane coupling agent used in the present invention is epoxysilane or aminosilane, etc., which serves to reinforce the bonding strength between the base rubber and ferrite or other additive agents.

However, where silane coupling agent is mixed excessively, since the elongation percentage of the composite is reduced, the mixture ratio of the silane coupling agent is restricted 10 or less parts by weight with respect to the base rubber of 100 parts by weight.

The composite of the present invention further includes other ordinary additive agents such as plasticizer, filler, vulcanizer, stabilizer, flame retarder, heat-resistance agent, lubricant, etc. In particular, it is preferable to mix plasticizer represented by silicone oil, and inorganic powder filler such as talc, clay, silica, barium sulfate, titanium oxide, calcium carbonate, etc., in order to improve various rubber characteristics.

The composite according to the present invention can be obtained by mixing and kneading fluorine based rubber, silicone rubber, ferrite, carbon black, silane coupling agent, and other additive agents according to the

necessity with a kneader and further with a roller mill. The obtained composite is extruded so as to cover Kevlar fiber (Trademark of Dupont) to form a wire core. In the composite according to the present invention, even if a relatively large amount of ferrite is mixed, there exist various advantages such that the dispersibilities of ferrite and other additive agents such as silane coupling agent, silicone oil, etc. are excellent and further these additive agents will not be bled out of the vulcanized rubber.

The effect of the present invention will be described in further detail on the basis of test results.

(Test Examples)

Composites A to L were obtained by mixing components as listed in Table shown in Fig. 2 in accordance with the listed weight-part proportions and by kneading with a 10-inch roller mill at 60°C for 20 minutes under melted conditions.

| | |
|---|---|
| Fluorine based rubber 1 : | Ethylene propylene tetrafluorine copolymerized rubber; Mooney viscosity $ML_{1+4}$ (121°C):30 |
| Fluorine based rubber 2 : | Ethylene propylene tetrafluoride copolymerized rubber; Mooney viscosity $ML_{1+4}$ (121°C) : 15 |
| Silicone rubber : | Dimethyl polysiloxane |
| Ferrite : | Fine particles of 200 micron or less in diameter |
| Carbon black : | Particles of 38 micron on average |
| Silane coupling agent : | Epoxysilane |
| Plasticizer : | Dimethyl silicon oil |
| Filler : | Brarium sulfate |
| Vulcanizer 1 : | Dicumyleparoxide |
| Vulcanizer 2 : | Trialylisocyanulate |

Table shown in Fig. 2 also lists the test results or characteristics of the composites measured in compliance with the following test standards:

| | |
|---|---|
| Mooney viscosity : | 80°C $ML_{1+2}$ |
| Tensile strength : | JIS K 6301 |
| Elongation percentage : | JIS K 6301 |
| Heat resistance : | Elongation change percentage (%) after heated at 250°C for 70 hours |
| Embrittlement temp : | JIS K 6301 |
| Mixing/kneading : (Productivity) | o : Good<br>Δ : Difficult<br>x : Impossible |

In the table, in the case of the test examples from A to F, higher Mooney viscosity fluorine based rubber was used as the base rubber. In these examples, however, since silicone rubber is mixed, the viscosity of the

base rubber and the low embrittlement temperature can be reduced and further the mixing/kneading productivity and the low temperature characteristics can be improved.

However, when the silicone rubber becomes excessive, since the tensile strength, elongation percentage, and heat resistance decrease, the upper limit of the amount of the silicone rubber is about 60 parts by weight.

Further, when the base rubber is formed of only the fluorine based rubber, it is difficult to mix 400 parts by weight or more ferrite with the base rubber. When 20 parts by weight silicone rubber is mixed with the base rubber as shown in Table as (B), the mixing/kneading is enabled, and the more the silicone rubber is, the more easily the mixing/kneading will be enabled.

Therefore, in the rubber composite according to the present invention, it is possible to mix a relatively large amount of ferrite with the base rubber, thus improving the noise prevention characteristics.

Further, in the case of the test examples from G to L, fluorine base rubber of lower Mooney viscosity was used and 200 parts by weight ferrite is mixed under due consideration of the reinforcement without mixing silicone oil and filler. These test examples from G to L have almost the same tendency as those from A to F. This indicates that when fluorine based rubber of low viscosity is used, it is effective to reinforce the composite by increasing the mixture ratio of the base rubber.

As described above, the rubber composite for a wire core of a high tension resistive wire according to the present invention is excellent in noise prevention characteristics, extrusion productivity, low temperature characteristics, heat resistance characteristics, tensile strength, etc., which is the most suitable for use as a wire core of noise prevention high tension resistive wire for automotive vehicles.

## Claims

1. A rubber composite for a wire core of a high tension resistive wire, comprising:
   (a) 100 weight-part base rubber formed of a mixture of fluorine based rubber and silicone rubber;
   (b) 50 to 700 weight-part ferrite for noise prevention; and
   (c) 5 to 10 weight-part carbon black as a reinforcement agent.

2. The rubber composite of claim 1, which further comprises 10 or less weight-part silane coupling agent for increasing bonding strength between said base rubber and said ferrite.

3. The rubber composite of claim 1, which further comprises 10 or less weight-part plasticizer.

4. The rubber composite of claim 1, which further comprises 10 or less weight-part filler for improving rubber characteristics.

5. The rubber composite of claim 1, wherein a weight ratio of said fluorine based rubber to said silicone rubber in said mixture lies within a range from 4 : 6 to 9 : 1.

6. The rubber composite of claim 1, wherein said fluorine based rubber is an ethylene propylene tetrafluoride based fluorine rubber.

7. The rubber composite of claim 6, wherein said ethylene propylene tetrafluoride based fluorine rubber is elastic copolymer of ethylene proplylene tetrafluoride and/or vinylidene tetrafluoride and other copolymerizable monomer.

8. The rubber composite of claim 6, wherein said ethylene propylene tetrafluoride based rubber is expressed by the following chemical formula:

$$( - CF_2 - CF_2 - CH_2 - \overset{\overset{\displaystyle CH_3}{|}}{CH} - )\ n$$

9. The rubber composite of claim 1, wherein said silicone rubber is an organopolysiloxane based elastic material.

10. The rubber composite of claim 1, wherein particle diameters of said ferrite are less than 200 micron.

11. The rubber composite of claim 1, wherein a weight ratio of said ferrite to said base rubber lies preferably within a range from 2 to 4.

12. The rubber composite of claim 1, wherein said carbon black is a soft carbon black with a low hardness.

13. The rubber composite of claim 2, wherein said silane coupling agent is epoxysilane.

14. The rubber composite of claim 2, wherein said silane coupling agent is aminosilane.

15. The rubber composite of claim 3, wherein said plasticizer is silicone oil.

16. The rubber composite of claim 4, wherein said filler is an inorganic powder filler selected from the group essentially consisting of talc, clay, silica, barium sulfate, titanium oxide, and calcium carbon.

17. The rubber composite of claim 1, which further comprises additive agents selected from the group essentially consisting of vulcanizer, stabilizer, flame retarder, heat-resistance agent, and lubricant.

18. A method of manufacturing a wire core of a high tension resistive wire, which comprises the steps of:
   (a) mixing and kneading 100 weight-part base rubber formed of a mixture of fluorine based rubber and silicone rubber, 50 to 700 weight part ferrite, 5 to 10 weight-part carbon block with a roller mill at 60°C for 20 minutes under melted conditions; and
   (b) extruding the kneaded rubber composite on a reinforcing cord formed of a bundle of fibers to form a wire core of a high tension resistive wire.

## Patentansprüche

1. Kautschuk-Verbundstoff für einen Drahtkern eines hochspannungsfesten Drahts, umfassend:
   (a) 100 Gew.-Teile Kautschukbasis, gebildet aus einer Mischung eines Fluorkautschuks und eines Siliconkautschuks;
   (b) 50 bis 700 Gew.-Teile Ferrit zur Lärmverhinderung; und
   (c) 5 bis 10 Gew.-Teile Russ als Verstärkungsmittel.

2. Kautschuk-Verbundstoff gemäss Anspruch 1, welcher weiterhin 10 oder weniger Gew.-Teile Silankopplungsmittel zur Verstärkung der Bindungsfestigkeit zwischen der Kautschukbasis und dem Ferrit umfasst.

3. Kautschuk-Verbundstoff gemäss Anspruch 1, welcher weiterhin 10 oder weniger Gew.-Teile Weichmacher umfasst.

4. Kautschuk-Verbundstoff gemäss Anspruch 1, welcher weiterhin 10 oder weniger Gew.-Teile Füllstoffe zur Verbesserung der Kautschukcharakteristika umfasst.

5. Kautschuk-Verbundstoff gemäss Anspruch 1, worin das Gewichtsverhältnis des Fluorkautschuks zum Siliconkautschuk in der Mischung in einem Bereich von 4:6 bis 9:1 liegt.

6. Kautschuk-Verbundstoff gemäss Anspruch 1, dadurch **gekennzeichnet**, dass der Fluorkautschuk ein Fluorkautschuk auf Basis von Ethylen-Propylen-Tetrafluorid ist.

7. Kautschuk-Verbundstoff gemäss Anspruch 6, dadurch **gekennzeichnet**, dass der Fluorkautschuk auf Ethylen-Propylen-Tetrafluorid Basis ein elastisches Copolymer aus Ethylen-Propylen-Tetrafluorid und/oder Vinyliden-Tetrafluorid und weiteren copolymerisierbaren Monomeren ist.

8. Kautschuk-Verbundstoff gemäss Anspruch 6, dadurch **gekennzeichnet**, dass der Kautschuk auf Ethylen-Propylen-Tetrafluorid-Basis dargestellt ist durch die folgende chemische Formel:

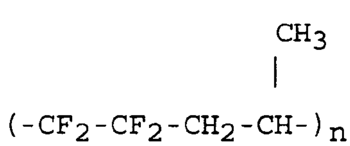

9. Kautschuk-Verbundstoff gemäss Anspruch 1, dadurch **gekennzeichnet**, dass der Siliconkautschuk ein elastisches Material auf Organopolysiloxan-Basis ist.

10. Kautschuk-Verbundstoff gemäss Anspruch 1, worin die Partikeldurchmesser von Ferrit weniger als 200 μm betragen.

11. Kautschuk-Verbundstoff gemäss Anspruch 1, worin das Gewichtsverhältnis des Ferrits zur Kautschukbasis vorzugsweise in einem Bereich von 2 bis 4 liegt.

12. Kautschuk-Verbundstoff gemäss Anspruch 1, dadurch **gekennzeichnet**, dass der Russ ein Weichruss mit niedriger Härte ist.

13. Kautschuk-Verbundstoff gemäss Anspruch 2, dadurch **gekennzeichnet**, dass das Silankopplungsmittel Epoxysilan ist.

14. Kautschuk-Verbundstoff gemäss Anspruch 2, dadurch **gekennzeichnet**, dass das Silankopplungsmittel Aminosilan ist.

15. Kautschuk-Verbundstoff gemäss Anspruch 3, dadurch **gekennzeichnet**, dass der Weichmacher ein Siliconöl ist.

16. Kautschuk-Verbundstoff gemäss Anspruch 4, dadurch **gekennzeichnet**, dass der Füllstoff ein anorganischer Pulverfüllstoff ist, ausgewählt aus der Gruppe, die im wesentlichen besteht aus Talk, Ton, Silica, Bariumsulfat, Titanoxid und Calciumcarbonat.

17. Kautschuk-Verbundstoff gemäss Anspruch 1, welcher weiterhin Zusatzstoffe umfasst, ausgewählt aus der Gruppe, bestehend im wesentlichen aus Vulkanisatoren, Stabilisatoren, flammverzögernden Mitteln, hitzebeständig machenden Mitteln und Schmierstoffen

18. Verfahren zur Herstellung eines Drahtkerns eines hochspannungsfesten Drahts, umfassend folgende Schritte:
   (a) Mischen und Kneten von 100 Gew.-Teilen Kautschukbasis, gebildet aus einer Mischung eines Fluorkautschuks und eines Siliconkautschuks, 50 bis 700 Gew.-Teilen Ferrit, 5 bis 10 Gew.-Teilen Russ mit einer Walzenmühle bei 60°C während 20 Minuten im geschmolzenen Zustand; und
   (b) Extrudieren des gekneteten Kautschuk-Verbundstoffs auf einem Verstärkungskabel, gebildet aus einem Faserbündel, zur Bildung eines Drahtkerns eines hochspannungsfesten Drahts.

## Revendications

1. Matériau composite à base de caoutchouc pour noyau de câble résistant à haute tension, comprenant :
   (a) 100 parties en poids d'un caoutchouc de base constitué par un mélange de caoutchouc fluoré et de caoutchouc de silicone ;
   (b) 50 à 700 parties en poids de ferrite antibruit ; et
   (c) 5 à 10 parties en poids de noir de carbone en tant qu'agent de renforcement.

2. Matériau composite à base de caoutchouc selon la revendication 1, qui comprend en outre 10 parties en poids ou moins d'agent de couplage à base de silane pour augmenter la force de liaison entre ledit caoutchouc de base et ladite ferrite.

3. Matériau composite à base de caoutchouc selon la revendication 1, qui comprend en outre 10 parties en poids ou moins de plastifiant.

4. Matériau composite à base de caoutchouc selon la revendication 1, qui comprend en outre 10 parties en poids ou moins de charge pour améliorer les caractéristiques du caoutchouc.

5. Matériau composite à base de caoutchouc selon la revendication 1, dans lequel le rapport pondéral dudit caoutchouc fluoré audit caoutchouc de silicone dans ledit mélange est situé dans une plage de 4:6 à 9:1.

6. Matériau composite à base de caoutchouc selon la revendication 1, dans lequel ledit caoutchouc fluoré

est un caoutchouc fluoré à base de tétrafluorure d'éthylène et de propylène.

7. Matériau composite à base de caoutchouc selon la revendication 6, dans lequel ledit caoutchouc fluoré à base de tétrafluorure d'éthylène et de propylène est un copolymère élastique de tétrafluorure d'éthylène et de propylène et/ou de tétrafluorure de vinylidène et d'un autre monomère copolymérisable.

8. Matériau composite à base de caoutchouc selon la revendication 6, dans lequel ledit caoutchouc à base de tétrafluorure d'éthylène et de propylène est exprimé par la formule chimique suivante :

$$(-CF_2-CF_2-CH_2-\overset{CH_3}{\overset{|}{CH}}-)\,n$$

9. Matériau composite à base de caoutchouc selon la revendication 1, dans lequel ledit caoutchouc de silicone est un matériau élastique à base d'organopolysiloxane.

10. Matériau composite à base de caoutchouc selon la revendication 1, dans lequel les diamètres des particules de ladite ferrite sont inférieurs à 200 µm.

11. Matériau composite à base de caoutchouc selon la revendication 1, dans lequel le rapport pondéral de ladite ferrite audit caoutchouc de base est situé de préférence dans une plage de 2 à 4.

12. Matériau composite à base de caoutchouc selon la revendication 1, dans lequel ledit noir de carbone est un noir de carbone tendre de faible dureté.

13. Matériau composite à base de caoutchouc selon la revendication 2, dans lequel ledit agent de couplage à base de silane est un époxysilane.

14. Matériau composite à base de caoutchouc selon la revendication 2, dans lequel ledit agent de couplage à base de silane est un aminosilane.

15. Matériau composite à base de caoutchouc selon la revendication 3, dans lequel ledit plastifiant est une huile de silicone.

16. Matériau composite à base de caoutchouc selon la revendication 4, dans lequel ladite charge est une charge pulvérulente inorganique choisie dans le groupe formé essentiellement par le talc, l'argile, la silice, le sulfate de barium, l'oxyde de titane et le carbonate de calcium.

17. Matériau composite à base de caoutchouc selon la revendication 1, qui comprend en outre des additifs choisis dans le groupe formé essentiellement par un vulcanisant, un stabilisant, un retardateur de flamme, un agent de résistance à la chaleur et un lubrifiant.

18. Procédé de fabrication d'un noyau de câble résistant à haute tension, qui comprend les étapes suivantes :
(a) mélanger et malaxer à l'aide d'un broyeur à rouleaux à 60°C pendant 20 min à l'état fondu 100 parties en poids d'un caoutchouc de base constitué par un mélange de caoutchouc fluoré et de caoutchouc de silicone, 50 à 700 parties en poids de ferrite, 5 à 10 parties en poids de noir de carbone ; et
(b) extruder le matériau composite à base de caoutchouc malaxé sur un cordon de renforcement et constitué par un faisceau de fibres pour former un noyau de câble résistant à haute tension.

FIG.1
PRIOR ART

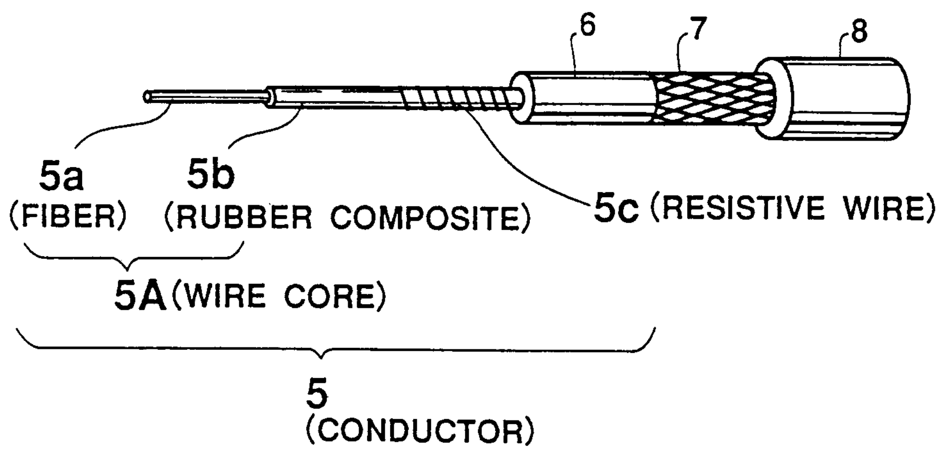

# FIG.2

| COMPOSITE NO. / COMPONENT (WEIGHT PART) | A | B | C | D | E | F | G | H | I | J | K | L |
|---|---|---|---|---|---|---|---|---|---|---|---|---|
| FLUORINE RUBBER 1 | 100 | 80 | 70 | 60 | 50 | 40 | — | — | — | — | — | — |
| FLUORINE RUBBER 2 | — | — | — | — | — | — | 100 | 80 | 70 | 60 | 50 | 40 |
| SILICONE RUBBER | — | 20 | 30 | 40 | 50 | 60 | — | 20 | 30 | 40 | 50 | 60 |
| FERRITE | 400 | 400 | 400 | 400 | 400 | 400 | 200 | 200 | 200 | 200 | 200 | 200 |
| CARBON BLACK | 10 | 10 | 10 | 10 | 10 | 10 | 10 | 10 | 10 | 10 | 10 | 10 |
| SILANE COUPLING AGENT | 10 | 10 | 10 | 10 | 10 | 10 | 10 | 10 | 10 | 10 | 10 | 10 |
| PLASTICIZER | 10 | 10 | 10 | 10 | 10 | 10 | — | — | — | — | — | — |
| FILLER | 10 | 10 | 10 | 10 | 10 | 10 | — | — | — | — | — | — |
| VULCANIZER 1 | 4 | 4 | 4 | 4 | 4 | 4 | 4 | 4 | 4 | 4 | 4 | 4 |
| VULCANIZER 2 | 7 | 7 | 7 | 7 | 7 | 7 | 7 | 7 | 7 | 7 | 7 | 7 |
| MOONEY VISCOSITY | — | 76 | 59 | 46 | 33 | 26 | — | 71 | 50 | 42 | 30 | 25 |
| TENSILE STRENGTH | — | 42 | 39 | 37 | 36 | 30 | — | 39 | 38 | 36 | 32 | 29 |
| ELONGATION | — | 88 | 68 | 65 | 60 | 58 | — | 71 | 65 | 62 | 57 | 51 |
| HEAT RESISTANCE | — | -24 | -42 | -50 | -55 | -59 | — | -35 | -36 | -41 | -52 | -59 |
| EMBRITTLEMENT TEMP | — | -5 | -7 | -11 | -18 | -21 | — | -6 | -8 | -13 | -20 | -21 |
| MIXING PRODUCTIVITY | × | △ | ○ | ○ | ○ | ○ | × | △ | ○ | ○ | ○ | ○ |